# EUROPÄISCHE PATENTSCHRIFT

(11) **EP 3 555 713 B1**
(45) Veröffentlichungstag und Bekanntmachung des Hinweises auf die Patenterteilung: **17.02.2021**
(21) Anmeldenummer: 17791400.9
(22) Anmeldetag: 30.10.2017
(51) Int. Cl.: G05B 19/042, G05B 19/418

(54) **VERFAHREN ZUR INBETRIEBNAHME ODER WARTUNG EINES FELDGERÄTS DER AUTOMATISIERUNGSTECHNIK**
METHOD FOR STARTING UP OR SERVICING AN AUTOMATION FIELD DEVICE
PROCÉDÉ DE MISE EN SERVICE OU D'ENTRETIEN D'UN APPAREIL DE TERRAIN DE LA TECHNIQUE DE L'AUTOMATISATION

(30) Priorität: 13.12.2016 DE 102016124146
(43) Veröffentlichungstag der Anmeldung: 23.10.2019
(73) Patentinhaber: Endress+Hauser Process Solutions AG, 4153 Reinach (CH)
(72) Erfinder: SCHMIDT, Thomas, 4058 Basel (CH); FINK, Nikolai, 4147 Aesch (CH)
(74) Vertreter: Andres, Angelika Maria
(86) Internationale Anmeldenummer: PCT/EP2017/077752
(87) Internationale Veröffentlichungsnummer: WO 2018/108375

(56) Entgegenhaltungen:
- EP-A2- 1 647 869
- WO-A1-2014/023468
- DE-A1-102011 084 789
- DE-A1-102012 112 842
- US-A1- 2015 046 125

## Beschreibung

Die Erfindung betrifft ein Verfahren zur Inbetriebnahme oder Wartung eines Feldgeräts zur Bestimmung oder Überwachung einer physikalischen oder chemischen Prozessgröße eines Medium in einem Prozess der Automatisierungstechnik.

In Automatisierungsanlagen, insbesondere in Prozessautomatisierungsanlagen, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräte, Durchflussmessgeräte, Druck- und Temperaturmessgeräte, pH-Redoxpotentialmessgeräte, Leitfähigkeitsmessgeräte, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Vielzahl solcher Feldgeräte wird von der Firma Endress + Hauser hergestellt und vertrieben.

In modernen Industrieanlagen erfolgt die Kommunikation zwischen zumindest einer übergeordneten Steuereinheit und den Feldgeräten in der Regel über ein Bussystem, wie beispielsweise Profibus® PA, Foundation Fieldbus® oder HART®. Die Bussysteme können sowohl drahtgebunden als auch drahtlos ausgestaltet sein. Die übergeordnete Steuereinheit dient zur Prozesssteuerung, zur Prozessvisualisierung, zur Prozessüberwachung sowie zur Inbetriebnahme und Bedienung der Feldgeräte und wird auch als Konfigurier-/Managementsystem bezeichnet. Auch ist es bekannt geworden, Feldgeräte mit Internetschnittstellen zur Kommunikation und/oder zur Energieversorgung auszurüsten. In vielen Anwendungen ist ein sog. Edge Device vorgesehen, das die Kommunikation zum Internet für eine definierte Gruppe von Feldgeräten übernimmt.

In der Automatisierungstechnik ist jedem Feldgerät eine eindeutige Identifizierungsinformation zugeordnet. Beispielsweise ist zwecks eindeutiger Identifizierung jedem Feldgerät eine eindeutige Seriennummer zugeordnet. Es ist auch bekannt geworden, dass auf einem dem Feldgerät zugeordneten Display ein statischer - also über die Zeit unveränderter -, optisch auslesbarer Code angezeigt wird, der gleichfalls dazu dient, das Feldgerät eindeutig zu identifizieren. Das Auslesen kann visuell durch das Bedienpersonal oder automatisiert über ein entsprechendes Lese- und/oder Bedientool, z.B. einen Barcode-Leser, erfolgen.

Weiterhin ist es bekannt, dass dem Bedienpersonal bei der Inbetriebnahme oder der Wartung eines Feldgeräts aus internetbasierten Quellen Informationen zur Verfügung gestellt werden. Diese Informationen sind dazu geeignet, die Inbetriebnahme oder Wartung des Feldgeräts vor Ort zu vereinfachen.

US 2015/046125 A1 beschreibt ein Verfahren zum Bedienen eines Feldgeräts, wobei das Feldgerät mittels eines übergeordneten Datenverarbeitungssystems mit einem Bediengerät in Verbindung steht. So können Messwerte oder diagnoserelevante Parameter vom Feldgerät aufs Bediengerät übertragen werden und das Feldgerät vom Bediengerät aus bedient werden. Das übergeordnete Datenverarbeitungssystem beinhaltet einen Datenspeicher, der entweder lokal im Speicher oder extern hinterlegt ist.

In der EP 1 647 869 A2 ist eine Automatisierungskomponente mit einem integrierten RFID-Tag offenbart, welcher über eine ebenso integrierte Schreib- und Leseeinheit in den Tag schreiben oder ihn auslesen kann. Zusätzlich ist eine bewegliche RFID Schreib- und Leseeinheit vorgesehen, welche Daten in die Automatisierungskomponente schreiben oder aus ihr auslesen kann.

Der Erfindung liegt die Aufgabe zugrunde, ein Verfahren vorzuschlagen, das eine sichere Datenübertragung zwischen einem Feldgerät und einem Lese- und/oder Bedientool ermöglicht.

Die Aufgabe wird durch ein Verfahren zur Inbetriebnahme oder Wartung eines Feldgeräts zur Bestimmung oder Überwachung einer physikalischen oder chemischen Prozessgröße eines Medium in einem Prozess der Automatisierungstechnik gelöst, wobei das Verfahren insbesondere die folgenden Verfahrensschritte aufweist:
- Auslesen von einer in dem Feldgerät gespeicherten eindeutigen Identifikationsinformation, die dem Feldgerät zugeordnet ist, über einen statischen Code mittels eines Lese- und/oder Bedientools;
- optisches Auslesen von in dem Feldgerät gespeicherten Diagnose-Informationen, die sich auf zumindest ein aktuelles und/oder ein vergangenes Ereignis, das dem Feldgerät zuzuordnen ist, beziehen, über einen von dem Feldgerät erzeugten dynamischen Code mittels des Lese- und/oder Bedientools, wobei der Übertragungsweg und die Informationsübermittlung vom Feldgerät zum Lese- und/oder Bedientool unidirektional ist;
- Übermitteln der Identifikations- und Diagnoseinformationen von dem Lese- und/oder Bedientool an eine cloudbasierte Service Plattform,
- Übermitteln von gerätespezifischen Informationen zur Behandlung des durch die Diagnose-Informationen gekennzeichneten Ereignisses von der cloudbasierten Service Plattform an das Lese- und/oder Bedientool,
- Beseitigung des Ereignisses oder von Auswirkungen des Ereignisses unter Verwendung der übermittelten gerätespezifischen Informationen.

Bei dem Ereignis kann es sich beispielsweise um einen Fehleralarm, um eine Erst- oder Wieder-Inbetriebnahme oder um einen Reset des Feldgeräts handeln. Es kann sich aber auch um eine z.B. routinemäßige Wartungsaufforderung handeln.

Mit dem erfindungsgemäßen Verfahren ist es möglich, neben der Identifikation des Feldgeräts über den zumindest einen statischen maschinenlesbaren optischen Code auch zumindest einen dynamischen Code optisch auszulesen. Bevorzugt beinhaltet der zumindest eine dynamische Code Informationen über den Gerätestatus - es handelt sich hier also insbesondere um Diagnose- oder Statusinformationen, Historiendaten - also Daten, die während der Lebenszeit des Feldgeräts dem Feldgerät zugordnet werden -, Parametrier- oder Konfigurierdaten, Messdaten des Feldgeräts. Diese Informationen bzw. Daten können erfindungsgemäß optisch übertragen werden, ohne dass eine übliche Kommunikationsverbindung (drahtlos oder drahtgebunden) zu dem Feldgerät hergestellt werden muss. Da der Übertragungsweg unidirektional ist und auf die Informationsübermittlung vom Feldgerät zum Lese- und/oder Bedientool beschränkt ist, ist die Integrität des Feldgeräts jederzeit sichergestellt. Aufgrund des unidirektionalen Übertragungswegs lassen sich unerlaubte Manipulationen am Feldgerät effektiv vermeiden.
Gemäß einer vorteilhaften Weiterbildung der Erfindung sind in der oder werden über die Service Plattform gerätespezifische und/oder applikationsspezifische Informationen zu dem in Betrieb zu nehmenden oder zu wartenden Feldgerät aus mehreren Datenquellen zusammengetragen.

Als Datenquellen werden neben der zumindest einen Datenbank der cloudbasierten Service Plattform insbesondere herstellerspezifische Datenbanken, kundenspezifische Datenbanken und/oder öffentlich zugängliche Internet-Datenbanken verwendet.

Bevorzugt wird zumindest eine der nachfolgend genannten gerätespezifischen und/oder applikationsspezifischen Informationen zur Beseitigung des durch die Diagnose-Informationen angezeigten Ereignisses von der Service-Plattform an das Lese- und/oder Bedientool übertragen wird:
- Gerätespezifische Historien-, Produktions- und/oder Engineering-Daten,
- als kritisch eingestufte Feldgeräte-Parameter,
- als kritisch eingestufte Parameter des Prozesses, in dem das Feldgerät installiert ist, (im Falle der Radar-Füllstandsmessung sind entsprechend kritische Parameter beispielsweise eine Schaumbildung im Medium oder das Vorhandensein eines Rührwerks)
- Anweisung zum Austausch einer Komponente des Feldgeräts und entsprechende Kaufoptionen,
- Anweisung zum Austausch des Feldgeräts und entsprechende Kaufoptionen,
- Anweisung zum Kontaktieren eines Service-Technikers,
- Allgemeine Service-Informationen.

Eine vorteilhafte Ausgestaltung des erfindungsgemäßen Verfahrens sieht vor, dass als statischer Code ein Datamatrix Code, ein QR Code oder ein Barcode verwendet wird. Als dynamischer Code wird insbesondere ein FlickerCode oder ein 2D FlickerCode verwendet.

Weiterhin wird im Zusammenhang mit dem erfindungsgemäßen Verfahren vorgeschlagen, dass der statische Code und/oder der dynamische Code über ein Lese- und/oder Bedientool ausgelesen werden/wird, das mit einer Bildanalyse-Software ausgestattet ist. So kann z.B. eine Diagnosemeldung mittels der Bildanalyse-Software von dem Display des Feldgeräts abgelesen werden - und zwar online und offline.

Darüber hinaus wird vorgeschlagen, dass der statische Code über ein Lesemodul für einen RF-ID Chip ausgelesen wird.

Als Lese- und/oder Bedientool wird insbesondere ein Handheld, ein Smartphone, ein Tablet oder ein mobiles Endgerät insbesondere ein Laptop, ggf. mit Kamera, oder ein für die Automatisierungstechnik zum Bedienen von Feldgeräten speziell entwickeltes Bedientool verwendet.

Gemäß einer bevorzugten Ausgestaltung des erfindungsgemäßen Verfahrens ist vorgesehen, dass über den dynamischen Code ausgelesene Statusinformation auf dem Lese- und oder Bedientool gespeichert und/oder selektiv zur Anzeige gebracht wird, falls aktuell keine Kommunikationsverbindung zu der cloudbasierten Service Plattform herstellbar ist.

Zuvor wurde bereits betont, dass das erfindungsgemäße Verfahren die Integrität des Feldgeräts sicherstellt, da der Übertragungsweg unidirektional vom Feldgerät zum Lese- und/oder Bedientool vorgesehen ist. Eine vorteilhafte Ausführungsform des erfindungsgemäßen Verfahrens sieht vor, dass über das optische Auslesen des dynamischen Codes, das üblicherweise vor Ort durch das Servicepersonal durchgeführt wird, ein Rück-Übertragungsweg bzw. ein Rück-Kommunikationskanal zwischen dem Lese- und/oder Bedientool und dem Feldgerät freigeschaltet wird. Nachfolgend ist es dem Servicepersonal möglich, über das Lese- und/oder Bedientool Änderungen an dem Feldgerät vorzunehmen, beispielsweise kann ein Reset vorgenommen werden, oder einer oder mehrere der einstellbaren Parameter des Feldgeräts werden geändert.

Nachfolgend werden einzelne Verfahrensschritte einer bevorzugten Ausgestaltung des erfindungsgemäßen Verfahrens noch einmal kurz umrissen:
- Elektronische Identifizieren des Feldgeräts mittels Codes-Scannens des Typenschilds über ein tragbares Lese- und/oder Bedientool mit Internetverbindung,
- Elektronisches Auslesen einer Status- oder Diagnosemeldung mittels Codes-Scannens bevorzugt über dasselbe tragbare Lese- und/oder
- Bedientool mit Internetverbindung
- Laden von geräte- und/oder applikationsspezifischen Informationen und ggf. Abhilfemaßnahmen passend zu dem Feldgerät und der Status- oder Diagnosemeldung, z.B. über herstellerspezifische Datenbanken, allgemein verfügbare Internetquellen, Cloud-basierte Datenbanken, kundenspezifische Datenbanken
- Übertragen von gerätespezifischen und/oder applikationsspezifischen Informationen über Internet auf das Lese- und/oder Bedientool.

Bei den Abhilfemaßnahmen handelt es sich beispielsweise um:
- Überprüfung kritischer Parameter des Feldgeräts
- Überprüfung definierter Parameter des Prozesses bzw. der Applikation, der dem bzw. in der das Feldgerät installiert ist
- Austausch von Baugruppen/Ersatzteilen des Feldgeräts
- Austausch des Feldgeräts
- Kaufoptionen für eine Baugruppe/ein Ersatzteil/ein Feldgerät
- Allgemeine Service-Informationen
- Optional erfolgt die Vermittlung zu einem qualifizierten ServiceTechniker. Die gescannte Information wird zu einem spezialisierten Servicetechniker übertragen, wenn die von der Service Plattform an das Servicepersonal vor Ort zur Verfügung gestellte Information nicht ausreichend ist.
- Es ist möglich, weitere Geräteinformationen am Display des Feldgeräts auf Basis der empfohlenen Abhilfemaßnahmen zu scannen, z.B. kritische Parameter, Messwertaufzeichnungen und/oder in der Vergangenheit an dem Feldgerät aufgetretene Diagnosemeldungen (optional)

Zusammengefasst sind die Vorteile der erfindungsgemäßen Lösung insbesondere die nachfolgend genannten:
Aufgrund des - vorrangig - unidirektionalen optischen Übertragungswegs vom Feldgerät zu einem Lese- und/oder Bedientool mit Internetverbindung ist eine Manipulation des Feldgeräts - zumindest über einen Fernzugriff vom Internet her - auf das Lese- und/oder Bedientool und damit auf das Feldgerät ausgeschlossen. Weiterhin können feldgeräte- und applikationsspezifische - entsprechend der übermittelten Diagnosemeldung- Abhilfemaßnahmen zur Verfügung gestellt werden. Das Auftreten von Übertragungsfehlern durch fehlerhaftes visuelles Ablesen, Verstehen oder Weitergeben der auf dem Display des Feldgeräts angezeigten Informationen durch das Servicepersonal ist ausgeschlossen.

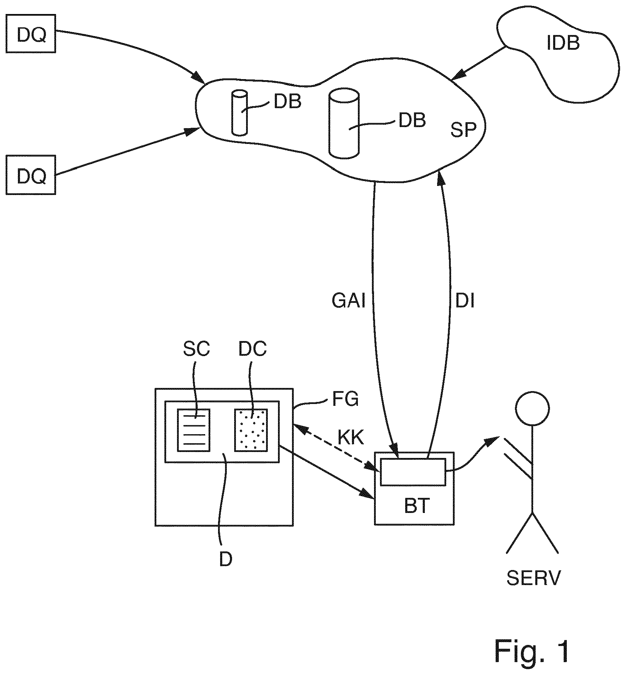

Die Erfindung wird anhand der Figur Fig. 1 näher erläutert. Fig. 1 zeigt schematisch ein System, das zur Durchführung des erfindungsgemäßen Verfahrens zur Inbetriebnahme oder Wartung eines Feldgeräts FG zur Bestimmung oder Überwachung einer physikalischen oder chemischen Prozessgröße eines Mediums in einem Prozess der Automatisierungstechnik geeignet ist. Beispiele für Feldgeräte sind bereits beispielhaft in der Beschreibungseinleitung genannt.

Das Feldgerät FG weist ein Display D auf. Über ein Lese- und/oder Bedientool BT wir ein statischer Code SC ausgelesen, der eine eindeutige Identifikationsinformation ID des Feldgeräts FG beinhaltet. Zusätzlich zu dem statischen Code SC kann auf dem Display D des Feldgeräts FG auch ein dynamischer Code DC dargestellt werden. Dieser dynamische Code DC wird gleichfalls optisch über das Lese- und/oder Bedientool BT gescannt bzw. ausgelesen. Der dynamische Code DC beinhaltet z.B. Diagnose-Informationen DI, die sich auf zumindest ein aktuelles und/oder ein vergangenes Ereignis beziehen, das dem Feldgerät FG zuzuordnen ist.

In einem weiteren Verfahrensschritt wird die Identifikations-Information ID und die z.B. Status- und/oder Diagnoseinformationen DI von dem Lese- und/oder Bedientool BT an eine cloudbasierte Service Plattform SP übermittelt. In der oder über die Service Plattform SP sind gerätespezifische und/oder applikationsspezifische Informationen GAI zu dem in Betrieb zu nehmenden oder zu wartenden Feldgerät FG bevorzugt aus mehreren Datenquellen DQ zusammengetragen. Bei den Datenquellen handelt es sich z.B. um die zumindest eine Datenbank DB der cloudbasierten Service Plattform SP; es kann sich jedoch auch zusätzlich oder alternativ um herstellerspezifische Datenbanken, kundenspezifische Datenbanken und/oder öffentlich zugängliche Internet-Datenbanken IDB handeln.

Die zu dem Feldgerät FG passenden geräte- und/oder applikationsspezifischen Informationen GAI zur Behebung des durch die Diagnose-Informationen DI gekennzeichneten Ereignisses, z.B. einer Fehlermeldung, werden von der cloudbasierten Service Plattform SP an das Lese- und/oder Bedientool BT übermittelt. Das Ereignis bzw. die Auswirkungen des Ereignisses werden unter Verwendung der übermittelten gerätespezifischen und/oder applikationsspezifischen Informationen GAI behoben. Üblicherweise können die vorgeschlagenen Behebungsmaßnahmen direkt von dem Servcepersonal Serv ausgeführt werden. In komplizierten Fällen wird dem Servicepersonal Serv der Vorschlag unterbreitet, einen spezialisierten Servicetechniker hinzuziehen.

An vorhergehender Stelle wurde bereits betont, dass ein unerlaubtes Manipulieren des Feldgeräts FG ausgeschlossen ist, da der Übertragungsweg vom Feldgerät FG zu dem Lese- und/oder Bedientool unidirektional ist. In gewissen Fällen kann es jedoch auch notwendig sein, dass über das optische Auslesen des dynamischen Codes DC ein Rück-Kommunikationskanal KK zwischen dem Feldgerät FG und dem Lese- und/oder Bedientool BT freigeschaltet wird. Hierdurch wird es nachfolgend möglich, über das Lese- und/oder Bedientool z.B. eine Änderung eines oder mehrerer Parameter des Feldgeräts FG vorzunehmen.

## Patentansprüche

1. Verfahren zur Inbetriebnahme oder Wartung eines Feldgeräts (FG) zur Bestimmung oder Überwachung einer physikalischen oder chemischen Prozessgröße eines Mediums in einem Prozess der Automatisierungstechnik, wobei folgende Verfahrensschritte ausgeführt werden:
- Auslesen von einer in dem Feldgerät gespeicherten eindeutigen Identifikationsinformation (ID), die dem Feldgerät (FG) zugeordnet ist, über einen statischen Code (SC) mittels eines Lese- und/oder Bedientools (BT);
- optisches Auslesen von in dem Feldgerät (FG) gespeicherten Diagnose-Informationen (DI), die sich auf zumindest ein aktuelles und/oder ein vergangenes Ereignis, das dem Feldgerät zuzuordnen ist, beziehen, über einen von dem Feldgerät erzeugten dynamischen Code (DC) mittels des Lese- und/oder Bedientools (BT), wobei der Übertragungsweg und die Informationsübermittlung vom Feldgerät (FG) zum Lese- und/oder Bedientool (BT) unidirektional ist;
- Übermitteln der Identifikations- und Diagnoseinformationen (ID, DI) von dem Lese- und/oder Bedientool (BT) an eine cloudbasierte Service Plattform (SP),
- Übermitteln von geräte- und/oder applikationsspezifischen Informationen (GAI) zur Behebung des durch die Diagnose-Informationen (DI) gekennzeichneten Ereignisses von der cloudbasierten Service Plattform (SP) an das Lese- und/oder Bedientool (BT),
- Beseitigung des Ereignisses oder von Auswirkungen des Ereignisses unter Verwendung der übermittelten gerätespezifischen und/oder applikationsspezifischen Informationen (GAI).

2. Verfahren nach Anspruch 1,
wobei in der oder über die Service Plattform (SP) gerätespezifische und/oder applikationsspezifische Informationen (GAI) zu dem in Betrieb zu nehmenden oder zu wartenden Feldgerät (FG) aus mehreren Datenquellen (DQ) gesammelt werden.

3. Verfahren nach Anspruch 2,
wobei als Datenquellen (DQ) neben der zumindest einen Datenbank (DB) der cloudbasierten Service Plattform (SP) insbesondere herstellerspezifische Datenbanken, kundenspezifische Datenbanken und/oder öffentlich zugängliche Internet-Datenbanken (IDB) verwendet werden.

4. Verfahren nach zumindest einem der Ansprüche 1 bis 3,
wobei zumindest eine der nachfolgend genannten gerätespezifischen und/oder applikationsspezifischen Informationen (GAI) zur Beseitigung des durch die Diagnose-Informationen (DI) angezeigten Ereignisses von der Service-Plattform (SP) an das Bedientool (BT) übertragen wird:
• Gerätespezifische Historien-, Produktions- und/oder Engineering-Daten,
• als kritisch eingestufte Parameter des Feldgeräts (FG),
• als kritisch eingestufte Parameter des Prozesses bzw. der Applikation, in dem bzw. in der das Feldgerät (FG) installiert ist,
• Anweisung zum Austausch einer Komponente des Feldgeräts (FG) und entsprechende Kaufoptionen,
• Anweisung zum Austausch des Feldgeräts (FG) und entsprechende Kaufoptionen,
• Anweisung zum Kontaktieren eines Service-Technikers,
• Allgemeine Service-Informationen.

5. Verfahren nach einem oder mehreren der vorhergehenden Ansprüche, wobei als statischer Code (SC) ein Datamatrix Code, ein QR Code oder ein Barcode verwendet wird.

6. Verfahren nach einem oder mehreren der vorhergehenden Ansprüche, wobei als dynamischer Code (DC) insbesondere ein FlickerCode oder ein 2D FlickerCode verwendet wird.

7. Verfahren nach einem oder mehreren der vorhergehenden Ansprüche, wobei der statische Code (SC) und/oder der dynamische Code (DC) über ein Bedientool (BT), das mit einer Bildanalyse-Software ausgestattet ist, ausgelesen werden/wird.

8. Verfahren nach zumindest einem der Ansprüche 1 bis 6,
wobei der Statische Code über ein Lesemodul für einen RF-ID Chip ausgelesen wird.

9. Verfahren nach einem oder mehreren der vorhergehenden Ansprüche, wobei als Bedientool insbesondere ein Handheld, ein Smartphone, ein Tablet oder ein mobiles Endgerät insbesondere ein Laptop, ggf. mit Kamera, oder ein für die Automatisierungstechnik speziell entwickeltes Bedientool verwendet wird.

10. Verfahren nach zumindest einem der Ansprüche 1-9,
wobei die über den dynamischen Code (DC) ausgelesene Diagnoseinformation (DI) auf dem Lese- und/oder Bedientool (BT) gespeichert wird, falls keine Kommunikationsverbindung zu der Service Plattform (SP) herstellbar ist.

11. Verfahren nach einem oder mehreren der vorhergehenden Ansprüche, wobei über das optische Auslesen des dynamischen Codes (DC) ein Kommunikationskanal (KK) zwischen dem Feldgerät (FG) und dem Lese- und/oder Bedientool (BT) freigeschaltet wird.

## Claims

1. Procedure for commissioning or maintaining a field device (FG) designed to determine or monitor a physical or chemical process variable of a medium in an automation technology process,
wherein the following process steps are performed:
- Reading of unique identification information (ID) saved in the field device, said information being assigned to the field device (FG) via a static code (SC) by means of a reader and/or operation tool (BT),
- Optical reading of diagnostic information (DI) saved in the field device (FG), said information relating to at least one current and/or past event that can be attributed to the field device, via a dynamic code (DC) generated by the field device by means of the reader and/or operation tool (BT), wherein the transmission path and the transmission of information from the field device (FG) to the reader and/or operation tool (BT) is unidirectional,
- Transmission of identification and diagnostic information (ID, DI) from the reader and/or operation tool (BT) to a cloud-based service platform (SP),
- Transmission of device-specific and/or application-specific information (GAI) for the purpose of rectifying the event identified by the diagnostic information (DI), said information being transmitted by the cloud-based service platform (SP) to the reader and/or operation tool (BT),
- Rectification of the event or the effects of the event using the transmitted device-specific and/or application-specific information (GAI).

2. Procedure as claimed in Claim 1,
wherein device-specific and/or application-specific information (GAI) concerning the field device (FG) to be commissioned or maintained is gathered from several data sources (DQ) in or via the service platform (SP).

3. Procedure as claimed in Claim 2,
wherein, in addition to the at least one database (DB) of the cloud-based service platform (SP), vendor-specific databases, customer-specific databases and/or publicly accessible Internet databases (IDB) are particularly used as data sources (DQ).

4. Procedure as claimed in at least one of the Claims 1 to 3,
wherein at least one of the following items of device-specific and/or application-specific information (GAI) are transmitted from the service platform (SP) to the operating tool (BT) for the purpose of rectifying the event indicated by the diagnostics information (DI):
• Device-specific history, production and/or engineering data
• Parameters of the field device (FG) which are categorized as critical
• Parameters of the process or application in which the field device (FG) is installed which are categorized as critical
• Instructions for replacing a component of the field device (FG) and corresponding purchase options
• Instructions for replacing the field device (FG) and corresponding purchase options
• Instructions for contacting a service technician
• General service information.

5. Procedure as claimed in one or more of the previous claims,
wherein a data matrix code, a QR code or a bar code is used as the static code (SC).

6. Procedure as claimed in one or more of the previous claims,
wherein a FlickerCode or a 2D FlickerCode is particularly used as the dynamic code (DC).

7. Procedure as claimed in one or more of the previous claims,
wherein the static code (SC) and/or the dynamic code (DC) is/are read via an operating tool (BT) equipped with an image analysis software.

8. Procedure as claimed in at least one of the Claims 1 to 6,
wherein the static code is read via a read module for an RF-ID chip.

9. Procedure as claimed in one or more of the previous claims,
wherein a handheld, a smartphone, a tablet or a mobile terminal, particularly a laptop, potentially with a camera, or an operating tool specially developed for automation engineering is used as the operating tool.

10. Procedure as claimed in at least one of the Claims 1 to 9,
wherein the diagnostics information (DI) read via the dynamic code (DC) is saved on the reader and/or operation tool (BT) if it is not possible to establish a communication connection to the service platform (SP).

11. Procedure as claimed in one or more of the previous claims,
wherein a communication channel (KK) is activated between the field device (FG) and the reader and/or operation tool (BT) via the optical read-out of the dynamic code (DC).

## Revendications

1. Procédé destiné à la mise en service ou à la maintenance d'un appareil de terrain (FG) destiné à la détermination ou à la surveillance d'une grandeur de process physique ou chimique d'un produit dans un process de la technique d'automatisation,
les étapes de procédé suivantes étant exécutées :
- Lecture d'une information d'identification (ID) univoque enregistrée dans l'appareil de terrain, laquelle information est affectée à l'appareil de terrain (FG) via un code statique (SC) au moyen d'un outil de lecture et/ou d'exploitation (BT),
- Lecture optique d'informations de diagnostic (DI) enregistrées dans l'appareil de terrain (FG), lesquelles informations se rapportent à un événement actuel et/ou passé attribuable à l'appareil de terrain, via un code dynamique (DC) généré par l'appareil de terrain au moyen de l'outil de lecture et/ou d'exploitation (BT), le chemin de transmission et la transmission des informations de l'appareil de terrain (FG) à l'outil de lecture et/ou d'exploitation (BT) étant unidirectionnels,
- Transmission des informations d'identification et de diagnostic (ID, DI) de l'outil de lecture et/ou d'exploitation (BT) à une plateforme de services basée sur le cloud (SP),
- Transmission d'informations spécifiques à l'appareil et/ou à l'application (GAI) en vue de l'élimination de l'événement identifié par les informations de diagnostic (DI), laquelle transmission s'effectue de la plateforme de services basée sur le cloud (SP) à l'outil de lecture et/ou d'exploitation (BT),
- Élimination de l'événement ou des effets de l'événement à l'aide des informations transmises spécifiques à l'appareil et/ou spécifiques à l'application (GAI).

2. Procédé selon la revendication 1,
pour lequel des informations spécifiques à l'appareil et/ou à l'application (GAI) concernant l'appareil de terrain (FG) à mettre en service ou à entretenir sont collectées à partir de plusieurs sources de données (DQ) dans ou par l'intermédiaire de la plateforme de services (SP).

3. Procédé selon la revendication 2,
pour lequel, outre l'au moins une base de données (DB) de la plateforme de services basée sur le cloud (SP), notamment des bases de données spécifiques aux fabricants, des bases de données spécifiques aux clients et/ou des bases de données Internet (IDB) accessibles au public sont utilisées comme sources de données (DQ).

4. Procédé selon au moins l'une des revendications 1 à 3,
pour lequel au moins l'une des informations spécifiques à l'appareil et/ou spécifiques à l'application (GAI) mentionnées ci-dessous est transmise de la plateforme de service (SP) à l'outil d'exploitation (BT) en vue d'éliminer l'événement indiqué par les informations de diagnostic (DI) :
• Données d'historique, de production et/ou d'ingénierie spécifiques à l'appareil
• Paramètres de l'appareil de terrain (FG) classés comme critiques
• Paramètres du process ou de l'application, dans lequel l'appareil de terrain (FG) est installé, classés comme critiques
• Instructions pour le remplacement d'un composant de l'appareil de terrain (FG) et options d'achat correspondantes
• Instructions pour le remplacement de l'appareil de terrain (FG) et options d'achat correspondantes
• Instructions pour le contact d'un technicien de service,
• Informations générales sur les services.

5. Procédé selon au moins l'une ou plusieurs des revendications précédentes, pour lequel un code Datamatrix, un QR code ou un code à barres est utilisé comme code statique (SC).

6. Procédé selon au moins l'une ou plusieurs des revendications précédentes, pour lequel un FlickerCode ou un FlickerCode 2D est notamment utilisé comme code dynamique (DC).

7. Procédé selon au moins l'une ou plusieurs des revendications précédentes, pour lequel le code statique (SC) et/ou le code dynamique (DC) est/sont lu(s) via un outil d'exploitation (BT) équipé d'un logiciel d'analyse d'images.

8. Procédé selon au moins l'une des revendications 1 à 6,
pour lequel le code statique est lu via un module de lecture pour une puce RF-ID.

9. Procédé selon au moins l'une ou plusieurs des revendications précédentes, pour lequel l'outil d'exploitation utilisé est notamment un appareil portatif, un smartphone, une tablette ou un terminal mobile, notamment un ordinateur portable, éventuellement avec une caméra, ou un outil d'exploitation spécialement développé pour la technique d'automatisation.

10. Procédé selon au moins l'une des revendications 1 à 9,
pour lequel les informations de diagnostic (DI) lues via le code dynamique (DC) sont stockées sur l'outil de lecture et/ou d'exploitation (BT) si aucune liaison de communication avec la plateforme de services (SP) ne peut être établie.

11. Procédé selon au moins l'une ou plusieurs des revendications précédentes, pour lequel, un canal de communication (KK) entre l'appareil de terrain (FG) et l'outil de lecture et/ou d'exploitation (BT) est activé via la lecture optique du code dynamique (DC).
